# EUROPEAN PATENT SPECIFICATION

(11) **EP 3 793 180 B1**
(45) Date of publication and mention of the grant of the patent: **08.11.2023**
(21) Application number: 20182002.4
(22) Date of filing: 24.06.2020
(51) Int. Cl.: H04N 1/00

(54) **DISPLAY CONTROL DEVICE AND IMAGE FORMING APPARATUS**
ANZEIGESTEUERUNGSVORRICHTUNG UND BILDERZEUGUNGSVORRICHTUNG
DISPOSITIF DE COMMANDE D'AFFICHAGE ET APPAREIL DE FORMATION D'IMAGES

(30) Priority: 10.09.2019 US 201916565738
(43) Date of publication of application: 17.03.2021
(73) Proprietor: Toshiba TEC Kabushiki Kaisha, Tokyo 141-8562 (JP)
(72) Inventor: ENDO, Katsuya, Shinagawa-ku, Tokyo 141-8562 (JP)
(74) Representative: Bandpay & Greuter

(56) References cited:
- EP-A2- 1 073 252
- JP-A- H04 181 438
- US-A1- 2016 139 994
- US-B1- 9 996 777

## Description

### FIELD

Embodiments described herein relate generally to a display control device, an image forming apparatus, and methods related thereto.

### BACKGROUND

As one form of an image forming apparatus, a multi-functional peripheral (MFP) using an electrophotographic process is known. A multi-functional peripheral includes a scanner that reads an image and a printer that prints an image. The convenience of a multi-functional peripheral can be further improved by connecting an optional device.

For example, when a trouble such as a failure or damage of a part of a multi-functional peripheral occurs, the multi-functional peripheral detects the troubled occurrence, stops the operation, and transitions to a service call state. A user then waits for a serviceman and cannot use the multi-functional peripheral during that time.

US9996777B1 describes an image forming apparatus according to the preamble of claim 1.

### DESCRIPTION OF THE DRAWINGS

FIG. 1 is an external view illustrating an overall configuration example of an image forming apparatus according to an embodiment;
FIG. 2 is a block diagram illustrating an overall configuration example of the image forming apparatus;
FIG. 3 is a block diagram illustrating an example of a schematic configuration of a system processing unit or the like;
FIG. 4A is a diagram illustrating a display example of an initial screen including an initial menu;
FIG. 4B is a diagram illustrating a display example of a serviceman call including a detachment menu;
FIG. 4C is a diagram illustrating a display example of a detachment check screen;
FIG. 4D is a diagram illustrating a display example of a unit state screen indicating units that are not detached and units that are detached;
FIG. 5 is a flowchart illustrating an example of display control and detachment control by the image forming apparatus;
FIG. 6 is a flowchart illustrating an example of the determination of detachment necessity of the image forming apparatus; and
FIG. 7 is a diagram illustrating an example of a network connection configuration of the image forming apparatus.

### DETAILED DESCRIPTION

The invention is set out in the appended set of claims.

According to the present invention, there is provided an image forming apparatus, comprising a display control device, a display, and an input interface. The display control device comprises: a memory configured to store display information; a processor configured to give a command to display a detachment menu for accepting detachment of a trouble-occurred target unit based on a trouble occurrence of the trouble-occurred target unit included in an image forming apparatus; and a display interface configured to output display information in response to the command from the processor. The display is configured to display the detachment menu based on the output display information from the display interface. The input interface is configured to accept a detachment input of the trouble-occurred target unit from the detachment menu.

The processor is configured to detect a detachment candidate included in the trouble-occurred target unit based on the trouble occurrence information, give a command to display the detachment menu including the detachment candidate, and virtually detach the detachment candidate by ignoring all signals come from the detachment candidate to invalidate a function of the detachment candidate.

According to one aspect of the invention, the term "detaching the detachment candidate" signifies an action to put a detachment candidate into a state in which it is virtually detached from the display control device so that functions of the detachment candidate are invalidated. The expression "the detachment candidate is virtually detached from the display control device" signifies a state in which the processor ignores a part of, or all signals come from the detachment candidate. In other words, the processor operates as if the detachment candidate does not exist by ignoring the signals come therefrom even though the processor recognizes IP address of the detachment candidate.

Preferably, the memory stores a trouble occurrence history of a unit, and the processor determines the necessity of acceptance of detachment of the trouble-occurred target unit based on the trouble occurrence history and gives a command to display the detachment menu based on the determination result.

Preferably, the processor gives a command to display detachment management information in response to a request for displaying the detachment management information.

Preferably, the processor detaches the trouble-occurred target unit in response to the acceptance of the detachment of the trouble-occurred target unit.

Preferably, the processor gives a command to display a unit state indicating attached units and detached units based on the detachment of the trouble-occurred target unit, and the display displays the unit state.

Preferably, the processor gives a command to display an initial menu including information regarding the detachment unit based on an activation instruction when there is a detached unit, and the display displays the initial menu.

Preferably, the processor detects a detachment candidate included in the trouble-occurred target unit based on the trouble occurrence information and gives a command to display the detachment menu including the detachment candidate, the display displays the detachment menu including the detachment candidate, and the input interface accepts detachment of the detachment candidate from the detachment menu.

Preferably, the processor detaches the detachment candidate in response to the acceptance of the detachment of the detachment candidate.

Preferably, the memory stores a trouble occurrence history of a unit, and the processor determines the necessity of acceptance of detachment of the trouble-occurred target unit based on the trouble occurrence history and gives a command to display the detachment menu based on the determination result.

The apparatus may further comprise: a reader configured to read user identification information, wherein the processor accepts the detachment of the trouble-occurred target unit via the input interface based on the reading of the user identification information, and the memory stores detachment management information in which the user identification information is associated with the detachment of the trouble-occurred target unit.

Preferably, the processor gives a command to display detachment management information in response to a request for displaying the detachment management information, and the display displays the detachment management information.

The present invention further relates to a method for an image forming apparatus, comprising: displaying a detachment menu for accepting detachment of a trouble-occurred target unit based on trouble occurrence information from at least one of a printer, a scanner, a finisher, and a facsimile; displaying the detachment menu; and accepting a detachment input of the trouble-occurred target unit from the detachment menu. The method further comprises detecting a detachment candidate included in the trouble-occurred target unit based on the trouble occurrence information; displaying the detachment menu including the detachment candidate; and virtually detaching the detachment candidate by ignoring all signals come from the detachment candidate to invalidate a function of the detachment candidate.

The method may further comprise detaching the trouble-occurred target unit in response to accepting of the detachment input of the trouble-occurred target unit.

The method may further comprise displaying a unit state indicating attached units and detached units based on the detachment of the trouble-occurred target unit.

The method may further comprise displaying an initial menu including information regarding the detachment unit based on an activation instruction when there is a detached unit.

The method may further comprise detecting a detachment candidate included in the trouble-occurred target unit based on the trouble occurrence information and displaying the detachment menu including the detachment candidate; and accepting detachment of the detachment candidate from the detachment menu.

The method may further comprise storing a trouble occurrence history of a unit, and determining the necessity of accepting of detachment of the trouble-occurred target unit based on a trouble occurrence history and displaying the detachment menu based on the determination result.

Hereinafter, an example of an image forming apparatus including a display control device according to an embodiment will be described with reference to the drawings. In the drawings, the same reference numerals are given to the same configurations.

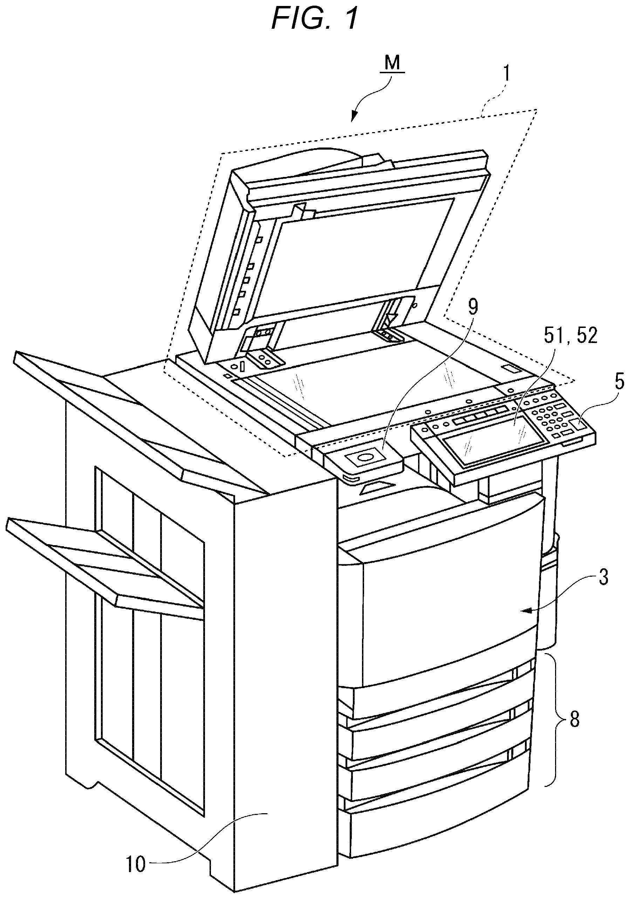

FIG. 1 is an external view illustrating an overall configuration example of an image forming apparatus M according to an embodiment. The image forming apparatus M is, for example, a multi-functional peripheral (MFP). The image forming apparatus M includes an image reading unit (scanner) 1, an image output unit (printer) 3, a control panel unit (a display and a user interface) 5, a sheet accommodation unit 8, and a card reader 9. The image output unit 3 of the image forming apparatus M includes a fixing device that fixes a toner image. The control panel unit 5 includes a display 51 and an input interface 52.

The image forming apparatus M forms an image on a sheet using a developer such as a toner. The sheet is, for example, a paper or a label sheet. The sheet may be anything as long as the image forming apparatus M can form an image on the surface thereof.

The control panel unit 5 accepts an operation from a user. The control panel unit 5 outputs a signal in response to the operation performed by the user to a system processing unit of the image forming apparatus M.

The image output unit 3 forms an image on a sheet based on image information generated by the image reading unit 1 or image information received via a communication line. The image output unit 3 forms an image through, for example, the following process. An image forming device of the image output unit 3 forms an electrostatic latent image on a photosensitive drum based on the image information. The image forming device unit of the image output unit 3 forms a visible image by attaching the developer to the electrostatic latent image. As a specific example of the developer, there is a toner. A sheet feeding device of the image output unit 3 feeds a sheet accommodated in the sheet accommodation unit 8 or a sheet manually fed and a transferring device of the image output unit 3 transfers the visible image to the sheet. A fixing device of the image output unit 3 fixes the visible image to the sheet by heating and pressurizing the sheet. The sheet accommodation unit 8 accommodates sheets to be used to form images in the image output unit 3. The card reader 9 receives card identification information stored in a wireless card through wireless communication with the wireless card.

The image reading unit 1 reads regarding target image information as brightness and darkness of light. The image reading unit 1 records the read image information. The recorded image information may be transmitted to another information processing apparatus via a network. The recorded image information may be formed as an image on the sheet by the image output unit 3.

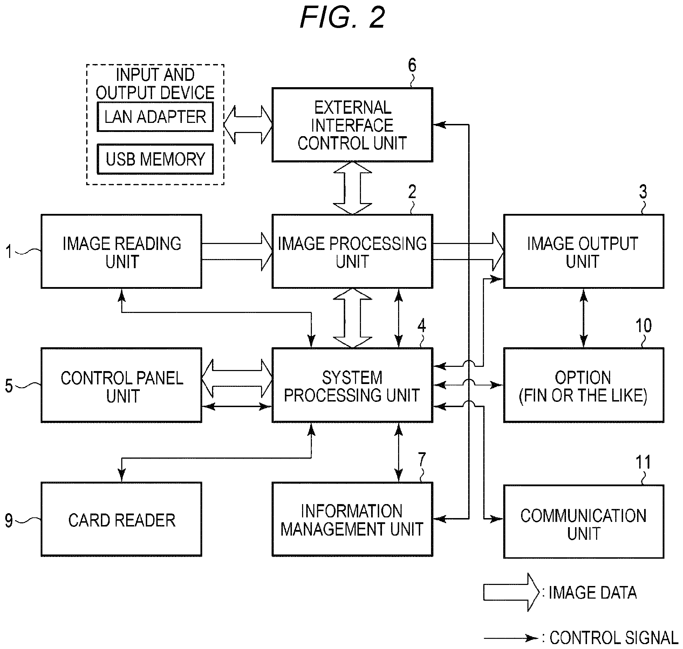

FIG. 2 is a block diagram illustrating an overall configuration example of the image forming apparatus M according to the embodiment. As illustrated in FIG. 2, the image forming apparatus M includes the image reading unit 1, an image processing unit 2, the image output unit 3, a system processing unit 4, the control panel unit 5, an external interface control unit 6, an information management unit 7, the card reader 9, an option 10, and a communication unit 11.

The image reading unit 1 reads an image of a document set in a document table and outputs image data in accordance with the execution of a scanner mode or a copy mode, or reads an image of a document set in the document table and outputs image data when sheets are conveyed one by one from an automatic document feeding device called an auto document feeder (ADF).

The image processing unit 2 corrects grayscales of image data output from the image reading unit 1 or the external interface control unit 6 and improves the quality of the image data. The image output unit 3 outputs an image based on the image data processed in the image processing unit 2. The system processing unit 4 controls the entire image forming apparatus based on a program stored in advance and information from each unit. For example, the system processing unit 4 forms at least a part of a display control device that controls display which will be described in detail below.

The control panel unit 5 performs guidance display of information related to the operation on the image forming apparatus for a user. The control panel unit 5 receives an operation input from the user and sets various kinds of information based on the operation input. For example, the control panel unit 5 sets setting information based on the operation input from the user.

The external interface control unit 6 is connected to an input and output device (a non-transitory computer-readable storage medium) such as a local area network (LAN) adapter or a universal serial bus (USB) memory for input and output of image data. The external interface control unit 6 can input a program or the like through the input and output device. The information management unit 7 manages (stores) setting information set with the control panel unit 5. The card reader 9 reads card identification information from a card carried by a user who attempts to use the image forming apparatus M.

For example, the option 10 includes a detachably mounted device called a finisher and the finisher punches in a punching unit and staples in a stapling unit. The punching unit holes the sheets to bind the sheets in a file or the like at designated positions on the sheets on which images are formed. In the stapling process, a plurality of sheets are collected and stapled to bind the plurality of sheets. The option 10 includes a facsimile. The fax transmits an image to a fax number of a transmission destination and prints out an image received from a fax number of a transmission source.

The communication unit 11 communicates with an external apparatus via a network. The network is a local area network and a wide area network. The communication unit 11 transmits and receives various kinds of information to and from an external apparatus via the network.

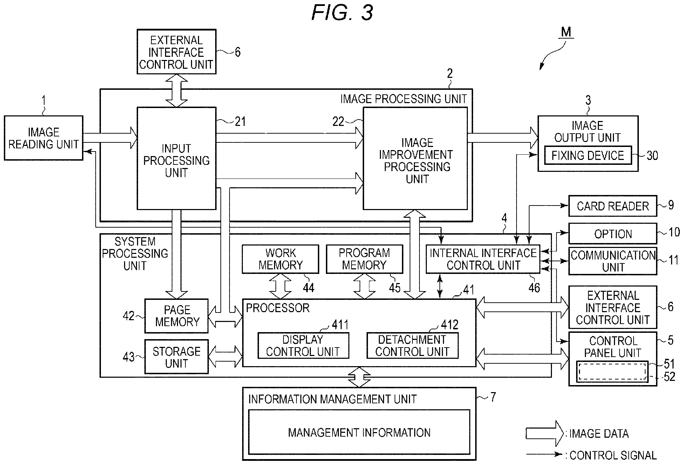

FIG. 3 is a block diagram illustrating an example of a schematic configuration of the system processing unit 4 or the like of the image forming apparatus M according to the embodiment. As illustrated in FIG. 3, the system processing unit 4 includes a processor 41, a page memory 42, a storage unit 43, a work memory 44, a program memory 45, an internal interface control unit 46, and the like. The processor 41 is a central processing unit (CPU), a micro processing unit (MPU), a digital signal processor (DSP), or the like.

The processor 41 receives various kinds of signals and information from the image reading unit 1, the image output unit 3, the control panel unit 5, and the card reader 9 via the internal interface control unit 46 and transmits various kinds of signals and information. For example, the internal interface control unit 46 functions as a card reader interface, and notifies the processor 41 of card identification information read by the card reader 9. The internal interface control unit 46 functions as a display interface and outputs display information corresponding to a display command of the processor 41 to the control panel unit 5 (a display 51).

The processor 41 operates based on a program stored in the program memory 45 or the like. For example, the processor 41 controls activation using an activation command from a user via the control panel unit 5 as a trigger and controls detachment using a detachment command from the user via the control panel unit 5 as a trigger. For example, a display control unit 411 controls display in accordance with the display command. A detachment control unit 412 controls detachment in accordance with the detachment command. The work memory 44 temporarily stores a program stored in the program memory 45 or the like and temporarily stores data to be handled by the program.

The procedure of processes and control to be described in the embodiment can be performed by software. Therefore, it is possible to easily realize the processes and the control by merely installing a program for performing the procedure of the processes and the control in the image forming apparatus via a non-transitory computer-readable storage medium storing the program.

For example, the program can be read from the non-transitory computer-readable storage medium via the external interface control unit 6, the read program can be stored in the storage unit 43 or the like, and the installation of the program can be completed. Thus, the processor 41 of the image forming apparatus can easily realize the processes and the control based on the installed program.

The page memory 42 temporarily stores image data read by the image reading unit 1 and passing through the image processing unit 2. The page memory 42 temporarily stores image data output from the external interface control unit 6 and passing through the image processing unit 2. The image data stored in the page memory 42 is developed in YMCK image data through a process by a raster image processor (RIP) in accordance with the execution of a print mode. The image processing unit 2 improves the quality of the YMCK image data and the image output unit 3 forms an image based on the YMCK image data with the improved quality.

The storage unit 43 is an information storage device such as a hard disk drive (HDD) or a solid-state drive (SSD) and stores the image data transmitted from the page memory 42. The storage unit 43 may store some or all of the programs causing the processor 41 to operate.

The control panel unit 5 includes the display 51 and an input interface 52. The display 51 is an image display device such as a liquid crystal display or an organic electro-luminescence (EL) display. The display 51 displays various kinds of information regarding the image forming apparatus M. The input interface 52 is an input device such as a touch panel provided to correspond to the display 51. The input interface 52 detects a touch input from the user and outputs the touch input in association with positional information of X and Y coordinates on the display 51. The control panel unit 5 may further include an input device such as a hard key.

As illustrated in FIG. 3, the image processing unit 2 includes an input processing unit 21 and an image improvement processing unit 22. The input processing unit 21 includes a lookup table (LUT) processing unit that corrects grayscale reproduction and corrects grayscale reproduction of image data input from the image reading unit 1 or the external interface control unit 6. The image improvement processing unit 22 performs high-quality processing based on a filtering process, a magnification process, a density adjustment process, and a grayscale process on the image data.

Next, the display control and the detachment control by the system processing unit 4 of the image forming apparatus M according to the embodiment will be described. The processor 41 of the system processing unit 4 controls display based on a display control program or the like stored in the program memory 45 or the like. For example, the display control unit 411 outputs a display command in accordance with an instruction from the processor 41. The detachment control unit 412 controls detachment in accordance with an instruction from the processor 41. The information management unit 7 is a memory that stores management information. The management information stores display information for displaying on the display of the control panel unit 5, trouble occurrence history of a unit, or the like.

For example, the processor 41 of the system processing unit 4 detects trouble occurrence such as a failure or damage in each unit such as the image reading unit 1, the image output unit 3, and the option 10, which are included in the image forming apparatus M. For example, each unit monitors trouble occurrence and outputs a trouble occurrence signal corresponding to the trouble occurrence. The processor 41 detects trouble occurrence in each unit based on the trouble occurrence signal from each unit.

The image reading unit 1 includes an automatic document feeding device (feeder). When sheet jam or the like occurs in the automatic document feeding device, a trouble occurrence signal indicating trouble occurrence of the automatic document feeding device is output. The image output unit 3 includes a sheet feeding device (feeder). When a trouble such as a sheet jam occurs in the sheet feeding device, a trouble occurrence signal indicating trouble occurrence of the sheet feeding device is output. The finisher included in the option 10 includes a punching unit and a stapling unit. When a trouble such as a sheet jam occurs in the punching unit, a trouble occurrence signal indicating trouble occurrence in the punching unit is output. When a trouble such as a sheet jam occurs in the stapling unit, a trouble occurrence signal indicating trouble occurrence in the stapling unit is output.

The processor 41 stops the operation of each process in the image forming apparatus M when trouble occurrence is detected. When trouble occurrence is detected, the processor 41 gives a command to display information regarding the trouble occurrence. The internal interface control unit 46 serving as a display interface outputs display information regarding trouble occurrence in response to the display command from the processor 41. The display 51 displays the display information regarding the trouble occurrence.

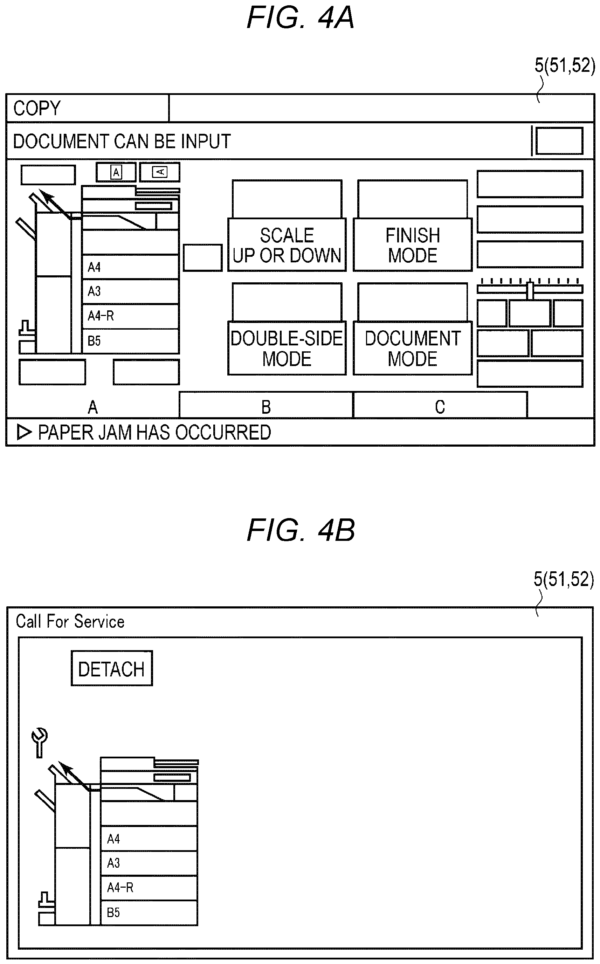

FIG. 4A is a diagram illustrating a display example of an initial screen including an initial menu. For example, when the processor 41 activates the image forming apparatus M (based on an activation instruction), the display 51 displays the initial screen. When the processor 41 detects trouble occurrence and gives a command to display information regarding the trouble occurrence, the display 51 additionally displays information regarding the trouble occurrence on the initial screen.

Further, the processor 41 determines whether the detected trouble is a target of a serviceman request, requests a serviceman based on a determination result, and gives a command to display a serviceman call including a detachment menu. The internal interface control unit 46 outputs display information of the serviceman call in response to the display command from the processor 41. The display 51 displays the display information of the serviceman call.

FIG. 4B is a display example of a serviceman call screen including a detachment menu. The detachment menu is a menu for accepting detachment of a trouble-occurred target unit. Here, for example, the trouble-occurred target unit is assumed to be a finisher. As illustrated in FIG. 4B, the display 51 displays a detachment menu for accepting detachment of the finisher in which the trouble occurs.

When the user selects an item of detachment displayed on the display 51, the input interface 52 accepts an input of detachment and notifies the processor 41 of the input of detachment. The processor 41 gives a command to display a check screen based on the input of detachment.

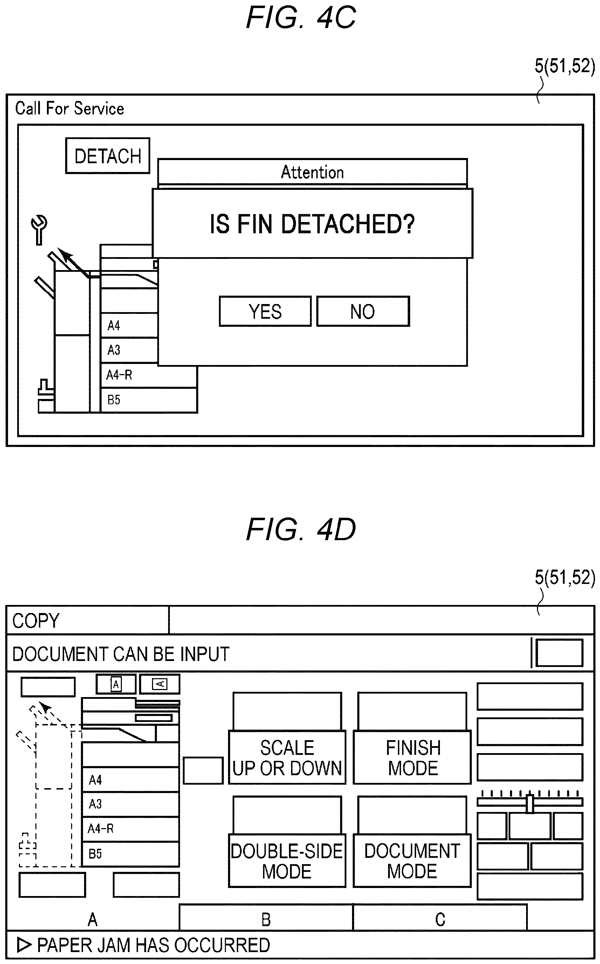

FIG. 4C is a display example of a detachment check screen. For example, the detachment check screen checks detachment of the trouble-occurred target finisher. When the user selects an item of YES displayed on the display 51, the input interface 52 accepts the input of YES and notifies the processor 41 of the input of YES. The processor 41 virtually detaches the trouble-occurred target finisher based on the input of YES and invalidates the function related to the trouble-occurred target finisher. The processor 41 switches sheet conveyance from the image output unit 3 to the finisher of the option 10 to sheet conveyance from the image output unit 3 to a sheet discharge tray. The finisher continues the physically attached state.

The processor 41 gives a command to display a unit state indicating units that are not detached (that is, attached units) and units that are detached (detached units) after processing the detachment. The display 51 displays the unit state.

FIG. 4D is a display example of a unit state screen indicating units that are not detached (attached units) and units that are detached (detached units). For example, on the unit state screen, the attached units and the detached units are identified for display by changing color. The attached units are displayed with a color other than gray and the detached units are displayed with gray. The unit state screen may be applied to the initial screen. Thus, when the image forming apparatus M is activated, the user can check the detached units.

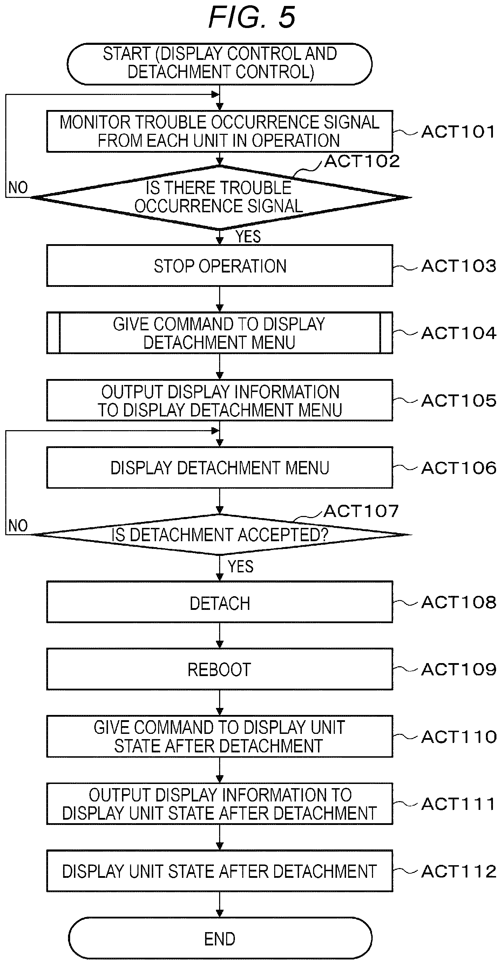

FIG. 5 is a flowchart illustrating examples of display control and detachment control by the image forming apparatus M according to the embodiment. As illustrated in FIG. 5, the processor 41 monitors a trouble occurrence signal from each unit in operation (ACT101). When the trouble occurrence signal is detected (YES in ACT102), the operation stops (ACT103). The processor 41 updates the trouble occurrence history stored in the information management unit 7 based on the trouble occurrence signal. The trouble occurrence history includes information indicating what kind of troubles occurs in which unit when. Further, the processor 41 gives a command to display the detachment menu for accepting the detachment of the trouble-occurred target unit (ACT104). The internal interface control unit 46 serving as a display interface outputs display information for displaying the detachment menu in response to the display command from the processor 41 (ACT105). The display 51 displays the detachment menu based on the display information (ACT106).

When the input interface 52 accepts the detachment of the trouble-occurred target unit (YES in ACT107), the processor 41 virtually detaches the trouble-occurred target unit (ACT108) and reboots each unit (ACT109). Thus, the function of the trouble-occurred target unit is invalidated.

After the processor 41 processes the detachment, the processor 41 gives a command to display a unit state indicating the attached units and the detached units (ACT110). The display 51 displays the unit state (ACT111).

FIG. 5 is a flowchart illustrating an example of the display control and the detachment control corresponding to trouble occurrence in the finisher of the image forming apparatus M according to the embodiment. As illustrated in FIG. 5, the processor 41 monitors trouble occurrence during operation (ACT101). When the trouble occurrence such as sheet jam is detected (YES in ACT102), the operation stops (ACT103). The processor 41 gives a command to display the detachment menu for accepting the detachment of the trouble-occurred target unit (ACT104). The internal interface control unit 46 serving as a display interface outputs the display information regarding the trouble occurrence in response to the display command from the processor 41 (ACT105). The display 51 displays the display information regarding the trouble occurrence (ACT106).

When the input interface 52 accepts the detachment of the trouble-occurred target unit (YES in ACT107), the processor 41 virtually detaches the trouble-occurred target unit (ACT108) and reboots each unit (ACT109). Thus, the function of the trouble-occurred target unit is invalidated.

After the processor 41 processes the detachment, the processor 41 gives a command to display a unit state indicating the attached units and the detached units (ACT110). The internal interface control unit 46 outputs the display information to display the unit state in response to the display command from the processor 41 (ACT111). The display 51 displays the unit state (ACT112).

Next, a case in which the processor 41 determines detachment necessity in the command to display the detached menu (ACT104) will be described. Here, a case of sheet conveyance jam inside the finisher will be described.

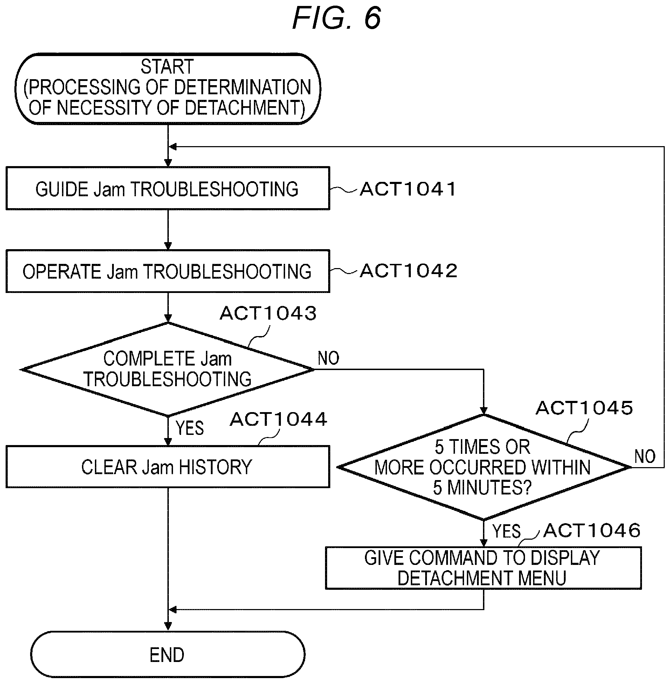

FIG. 6 is a flowchart illustrating an example of the determination of detachment necessity of the image forming apparatus M according to the embodiment. The processor 41 detects the trouble occurrence signal (YES in ACT102), stops the operation (ACT103), and performs a jam troubleshooting guidance (ACT1041). The display 51 displays the jam troubleshooting guidance.

For example, the user opens the cover of the finisher, troubleshoots the jam, and closes the cover (ACT1042). When the jam troubleshooting is completed (YES in ACT1 043), the processor 41 clears a jam history included in the trouble occurrence history (ACT1044). When the jam troubleshooting is not completed (NO in ACT1043) and a detachment condition is not satisfied (NO in ACT1045), the jam troubleshooting guidance continues (ACT1041).

The management information of the information management unit 7 includes the detachment condition. For example, the processor 41 determines whether the jam occurs 5 times or more in total at the current jam based on the trouble occurrence history and determines that the detachment condition is satisfied (the detachment is necessary) based on the determination result that the jam occurs 5 times or more (YES in ACT1045). Alternatively, the processor 41 determines whether the current jam is jam occurring within 5 minutes from the previous jam based on the trouble occurrence history and determines that the detachment condition is satisfied (the detachment is necessary) based on the determination result that the jam occurs within 5 minutes (YES in ACT1045). In this way, when a jam occurrence frequency in the finisher is high, the processor 41 determines that the finisher is a detachment target. When the processor 41 determines that the detachment condition is satisfied (YES in ACT1045), the processor gives the command to display the detached menu (ACT1046) and the process transitions to ACT105.

In the embodiment, the processor 41 processes a certain entire unit as a trouble-occurred target unit based on trouble occurrence of the certain unit. A sub-unit included in a certain unit may be processed as a trouble-occurred target. For example, when trouble occurrence is accepted from the finisher, the processor 41 detects sub-units such as a punching unit and a stapling unit included in the finisher as detachment candidates and gives a command to display a detachment menu including the detachment candidates of the punching unit and the stapling unit. The internal interface control unit 46 outputs display information to display the detachment menu including the detachment candidates of the punching unit and the stapling unit. The display 51 displays a detachment menu including the detachment candidates of the punching unit and the stapling unit.

The input interface 52 accepts the detachment candidates selected from the user. The processor 41 detaches a detachment candidate in response to the acceptance of the detachment of the detachment candidate. When the entire unit is detached, the entire unit is unusable. However, by detaching some of the sub-units among a plurality of sub-units included in the unit, it is possible to continuously use the remaining sub-units.

The image forming apparatus M may display a relationship between detachment and a detachment operator. The image forming apparatus M includes the card reader 9. The processor 41 accepts an operation input from the control panel unit 5 when card identification information read by the card reader 9 matches card identification information registered in the management information of the information management unit 7. The processor 41 stores detachment management information in which the card identification information read from the card reader 9 is associated with detachment (operation) accepted with the detachment menu in the information management unit 7. User identification information such as a user name is associated with the card identification information stored in the management information of the information management unit 7.

Further, the processor 41 gives a command to display the detachment management information based on a display request for the detachment management information from the control panel unit 5. The internal interface control unit 46 outputs the display information of the detachment management information. The display 51 displays the detachment management information. The display 51 may display the initial screen including the detachment management information. The detachment management information may be information in which the card identification information is associated with the detachment accepted with the detachment menu or may be information in which the user identification information is associated with the detachment accepted with the detachment menu. When the detachment management information on the initial screen or the like is displayed, the user who attempts to use the image forming apparatus M can also understand a detachment situation and which user performs the detachment. By knowing the user performing the detachment, it is possible to inquire about the detachment situation.

Next, the use of a network function will be described.

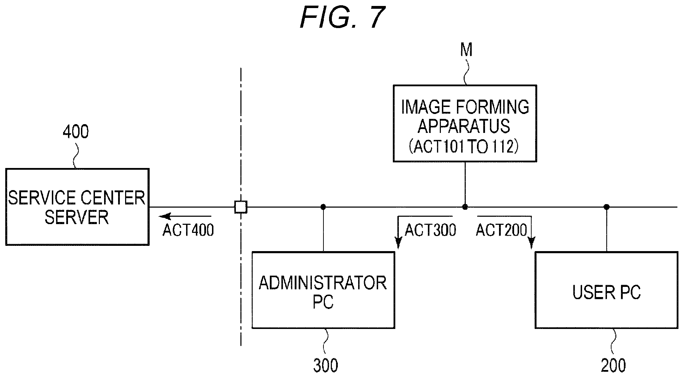

FIG. 7 is a diagram illustrating an example of a network connection configuration of the image forming apparatus M according to the embodiment. As illustrated in FIG. 7, the image forming apparatus M is connected to a network. A user PC 200, an administrator PC 300, a service center server 400, and the like are connected to the network.

As described above, the processor 41 detaches a trouble-occurred target unit based on an input of detachment. Further, the processor 41 instructs to output detachment information indicating detachment of the trouble-occurred target unit to the outside. The detachment information includes information regarding trouble occurrence in the trouble-occurred target unit. The communication unit 11 transmits the detachment information to the user PC 200 (ACT200). The communication unit 11 transmits the detachment information to the administrator PC 300 (ACT300). The communication unit 11 transmits the detachment information to the service center server 300 (ACT300).

For example, since an administrator of the administrator PC 300 can know the trouble occurrence in the image forming apparatus M and the detachment, the administrator can contact with a serviceman timely. By transmitting the detachment information to the service center server 300, it is possible to transfer the detachment information to the serviceman in advance. Thus, the handling of the serviceman becomes smooth and it is possible to expect a downtime reduction effect of the image forming apparatus M.

According to the above-described embodiment, when a trouble occurs in the image forming apparatus M, a user can designate a detachment target unit or sub-unit. Thus, the processor 41 detaches the designated detachment target unit or sub-unit. Thus, the user can use functions of the remaining valid units or functions of the remaining valid sub-units.

Since the display 51 distinguishes and displays units that are detached (detached units) and units that are not detached (attached units) from each other, the user can know a detachment situation and use functions of valid units. For example, the display 51 can distinguish and display these units on the initial screen at the time of activation. The user can know such information initially.

The processor 41 determines the necessity for acceptance of detachment of a trouble-occurred target unit based on the trouble occurrence history, and then gives a command to display the detachment menu based on the determination result. For example, a unit whose trouble occurrence frequency is high can be handled as a detachment target.

The information management unit 7 stores the detachment management information in which the card identification information is associated with detachment of the trouble-occurred target unit or stores the detachment management information in which the user identification information is associated with the detachment of the trouble-occurred target unit. The display displays the detachment management information on the initial screen. By displaying the detachment management information, the user who does not perform a detachment operation can grasp a detachment situation when the user attempts to use the image forming apparatus M.

Since the communication unit 11 transmits the detachment information to an external apparatus, handling of a serviceman can be efficient for recovery based on the information obtained from the external apparatus.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made without departing from the scope of the inventions. The accompanying claims are intended to cover such forms or modifications as would fall within the scope of the inventions.

## Claims

1. An image forming apparatus, comprising:
a display control device (4), comprising:
a memory configured to store display information;
a processor (41) configured to give a command to display a detachment menu for accepting detachment of a trouble-occurred target unit based on a trouble occurrence of the trouble-occurred target unit included in the image forming apparatus; and
a display interface (46) configured to output display information in response to the command from the processor,
a display configured to display the detachment menu based on the output display information from the display interface, and
an input interface configured to accept a detachment input of the trouble-occurred target unit from the detachment menu,
**characterized in that** the processor is configured to:
detect a detachment candidate included in the trouble-occurred target unit based on the trouble occurrence information,
give a command to display the detachment menu including the detachment candidate, and
virtually detach the detachment candidate by ignoring all signals come from the detachment candidate to invalidate a function of the detachment candidate.

2. The image forming apparatus according to claim 1, wherein
the memory stores a trouble occurrence history of a unit, and
the processor determines the necessity of acceptance of detachment of the trouble-occurred target unit based on the trouble occurrence history and gives a command to display the detachment menu based on the determination result.

3. The image forming apparatus according to claim 1 or 2, wherein
the processor gives a command to display detachment management information in response to a request for displaying the detachment management information.

4. The image forming apparatus according to any one of claims 1 to 3, wherein
the processor detaches the trouble-occurred target unit in response to the acceptance of the detachment of the trouble-occurred target unit.

5. The image forming apparatus according to claim 4, wherein
the processor gives a command to display a unit state indicating attached units and detached units based on the detachment of the trouble-occurred target unit, and
the display displays the unit state.

6. The image forming apparatus according to claim 4 or 5, wherein
the processor gives a command to display an initial menu including information regarding the detachment unit based on an activation instruction when there is a detached unit, and
the display displays the initial menu.

7. The image forming apparatus according to any one of claims 1 to 6, further comprising:
a reader configured to read user identification information, wherein
the processor accepts the detachment of the trouble-occurred target unit via the input interface based on the reading of the user identification information, and
the memory stores detachment management information in which the user identification information is associated with the detachment of the trouble-occurred target unit.

8. A method for an image forming apparatus, comprising:
displaying a detachment menu for accepting detachment of a trouble-occurred target unit based on trouble occurrence information from at least one of a printer, a scanner, a finisher, and a facsimile;
displaying the detachment menu; and
accepting a detachment input of the trouble-occurred target unit from the detachment menu;
**characterized by** further comprising:
detecting a detachment candidate included in the trouble-occurred target unit based on the trouble occurrence information;
displaying the detachment menu including the detachment candidate; and
virtually detaching the detachment candidate by ignoring all signals come from the detachment candidate to invalidate a function of the detachment candidate.

9. The method according to claim 8, further comprising:
detaching the trouble-occurred target unit in response to accepting of the detachment input of the trouble-occurred target unit.

10. The method according to claim 9, further comprising:
displaying a unit state indicating attached units and detached units based on the detachment of the trouble-occurred target unit.

11. The method according to claim 9 or 10, further comprising:
displaying an initial menu including information regarding the detachment unit based on an activation instruction when there is a detached unit.

## Patentansprüche

1. Bilderzeugungsvorrichtung, umfassend:
eine Anzeigesteuerungsvorrichtung (4), umfassend:
einen Speicher, der zum Speichern von Anzeigeinformationen konfiguriert ist;
einen Prozessor (41), der konfiguriert ist, um einen Befehl zum Anzeigen eines Abtrennungsmenüs zum Annehmen einer Abtrennung einer gestörten Zieleinheit basierend auf einem Auftreten einer Störung der gestörten Zieleinheit, die in der Bilderzeugungsvorrichtung beinhaltet ist, zu erteilen; und
eine Anzeigeschnittstelle (46), die konfiguriert ist, um als Reaktion auf den Befehl des Prozessors Anzeigeinformationen auszugeben,
eine Anzeige, die konfiguriert ist, um das Abtrennungsmenü basierend auf den Ausgangsanzeigeinformationen von der Anzeigeschnittstelle anzuzeigen, und
eine Eingabeschnittstelle, die konfiguriert ist, um eine Abtrennungseingabe der gestörten Zieleinheit aus dem Abtrennungsmenü anzunehmen, **dadurch gekennzeichnet, dass** der Prozessor zu Folgendem konfiguriert ist:
Erkennen eines Abtrennungskandidaten, der in der gestörten Zieleinheit beinhaltet ist, basierend auf den Fehlerauftretensinformationen,
Geben eines Befehls, um das Abtrennungsmenü einschließlich des Abtrennungskandidaten anzuzeigen, und
virtuelles Abtrennen des Abtrennungskandidaten, indem alle von dem Abtrennungskandidaten kommenden Signale ignoriert werden, um eine Funktion des Abtrennungskandidaten ungültig zu machen.

2. Bilderzeugungsvorrichtung nach Anspruch 1, wobei
der Speicher eine Störungshistorie einer Einheit speichert, und
der Prozessor die Notwendigkeit eines Annehmens einer Abtrennung der gestörten Zieleinheit basierend auf der Störungshistorie bestimmt und einen Befehl zum Anzeigen des Abtrennungsmenüs basierend auf dem Bestimmungsresultat gibt.

3. Bilderzeugungsvorrichtung nach Anspruch 1 oder 2, wobei
der Prozessor einen Befehl zum Anzeigen von Abtrennungsmanagementinformationen als Reaktion auf eine Anforderung zum Anzeigen der Abtrennungsmanagementinformationen gibt.

4. Bilderzeugungsvorrichtung nach einem der Ansprüche 1 bis 3, wobei:
der Prozessor die gestörte Zieleinheit als Reaktion auf die Annahme der Abtrennung der gestörten Zieleinheit abtrennt.

5. Bilderzeugungsvorrichtung nach Anspruch 4, wobei
der Prozessor einen Befehl zum Anzeigen eines Einheitsstatus, der angelagerte Einheiten und abgetrennte Einheiten angibt, basierend auf der Abtrennung der gestörten Zieleinheit gibt, und
die Anzeige den Zustand der Einheit anzeigt.

6. Bilderzeugungsvorrichtung nach Anspruch 4 oder 5, wobei
der Prozessor einen Befehl zum Anzeigen eines anfänglichen Menüs, das Informationen in Bezug auf die Abtrennungseinheit basierend auf einer Aktivierungsanweisung gibt, wenn es eine abgetrennte Einheit gibt, und
die Anzeige das anfängliche Menü anzeigt.

7. Bilderzeugungsvorrichtung nach einem der Ansprüche 1 bis 6, ferner umfassend:
ein Lesegerät, das konfiguriert ist, um Benutzeridentifizierungsinformationen zu lesen, wobei
der Prozessor basierend auf dem Lesen der Benutzeridentifikationsinformationen die Abtrennung der gestörten Zieleinheit über die Eingabeschnittstelle annimmt, und
der Speicher Abtrennungsmanagementinformationen speichert, in denen die Benutzeridentifizierungsinformationen mit der Abtrennung der gestörten Zieleinheit assoziiert sind.

8. Verfahren für eine Bilderzeugungsvorrichtung, umfassend:
Anzeigen eines Abtrennungsmenüs zum Annehmen einer Abtrennung einer gestörten Zieleinheit basierend auf Fehlerauftretensinformationen von mindestens einem von einem Drucker, einem Scanner, einem Finisher und einem Fax;
Anzeigen des Abtrennungsmenüs; und
Annehmen einer Abtrennungseingabe der gestörten Zieleinheit aus dem Abtrennungsmenü;
**dadurch gekennzeichnet, dass** es ferner Folgendes umfasst:
Erkennen eines Abtrennungskandidaten, der in der gestörten Zieleinheit beinhaltet ist, basierend auf den Fehlerauftretensinformationen,
Anzeigen des Abtrennungsmenüs einschließlich des Abtrennungskandidaten, und
virtuelles Abtrennen des Abtrennungskandidaten, indem alle von dem Abtrennungskandidaten kommenden Signale ignoriert werden, um eine Funktion des Abtrennungskandidaten ungültig zu machen.

9. Verfahren nach Anspruch 8, ferner umfassend:
Abtrennen der gestörten Zieleinheit als Reaktion auf ein Annehmen der Abtrennungseingabe der gestörten Zieleinheit.

10. Verfahren nach Anspruch 9, ferner umfassend:
Anzeigen eines Einheitszustands, der die angeschlossenen und die abgetrennten Einheiten anzeigt, basierend auf der Abtrennung der gestörten Zieleinheit.

11. Verfahren nach Anspruch 9 oder 10, ferner umfassend:
Anzeigen eines anfänglichen Menüs, das Informationen in Bezug auf die Abtrennungseinheit basierend auf einer Aktivierungsanweisung gibt, wenn es eine abgetrennte Einheit gibt.

## Revendications

1. Appareil de formation d'images, comprenant :
un dispositif de commande d'affichage (4), comprenant :
une mémoire configurée de manière à stocker des informations d'affichage ;
un processeur (41) configuré de manière à ordonner d'afficher un menu de détachement pour accepter le détachement d'une unité cible à occurrence de panne sur la base d'une occurrence de panne de l'unité cible à occurrence de panne incluse dans l'appareil de formation d'images ; et
une interface d'affichage (46) configurée de manière à fournir en sortie des informations d'affichage en réponse à l'instruction en provenance du processeur ;
un écran d'affichage configuré de manière à afficher le menu de détachement sur la base des informations d'affichage fournies en sortie à partir de l'interface d'affichage ; et
une interface d'entrée configurée de manière à accepter une entrée de détachement de l'unité cible à occurrence de panne à partir du menu de détachement ;
**caractérisé en ce que** le processeur est configuré de manière à :
détecter un candidat de détachement inclus dans l'unité cible à occurrence de panne sur la base des informations d'occurrence de panne ;
ordonner d'afficher le menu de détachement incluant le candidat de détachement ; et
détacher virtuellement le candidat de détachement en ignorant tous les signaux provenant du candidat de détachement afin d'invalider une fonction du candidat de détachement.

2. Appareil de formation d'images selon la revendication 1, dans lequel :
la mémoire stocke un historique d'occurrences de pannes d'une unité ; et
le processeur détermine la nécessité d'accepter le détachement de l'unité cible à occurrence de panne sur la base de l'historique d'occurrences de pannes, et ordonne d'afficher le menu de détachement sur la base du résultat de détermination.

3. Appareil de formation d'images selon la revendication 1 ou 2, dans lequel :
le processeur ordonne d'afficher des informations de gestion de détachement en réponse à une demande d'affichage des informations de gestion de détachement.

4. Appareil de formation d'images selon l'une quelconque des revendications 1 à 3, dans lequel :
le processeur détache l'unité cible à occurrence de panne en réponse à l'acceptation du détachement de l'unité cible à occurrence de panne.

5. Appareil de formation d'images selon la revendication 4, dans lequel :
le processeur ordonne d'afficher un état d'unité indiquant des unités attachées et des unités détachées, sur la base du détachement de l'unité cible à occurrence de panne ; et
l'écran d'affichage affiche l'état d'unité.

6. Appareil de formation d'images selon la revendication 4 ou 5, dans lequel :
le processeur ordonne d'afficher un menu initial incluant des informations connexes à l'unité de détachement sur la base d'une instruction d'activation lorsqu'il existe une unité détachée ; et
l'écran d'affichage affiche le menu initial.

7. Appareil de formation d'images selon l'une quelconque des revendications 1 à 6, comprenant en outre :
un lecteur configuré de manière à lire des informations d'identification d'utilisateur, dans lequel
le processeur accepte le détachement de l'unité cible à occurrence de panne par l'intermédiaire de l'interface d'entrée, sur la base de la lecture des informations d'identification d'utilisateur ; et
la mémoire stocke des informations de gestion de détachement dans lesquelles les informations d'identification d'utilisateur sont associées au détachement de l'unité cible à occurrence de panne.

8. Procédé pour un appareil de formation d'images, comprenant les étapes ci-dessous consistant à :
afficher un menu de détachement pour accepter le détachement d'une unité cible à occurrence de panne sur la base d'informations d'occurrence de panne provenant d'au moins l'un des éléments parmi une imprimante, un scanneur, un module de finition et un télécopieur ;
afficher le menu de détachement ; et
accepter une entrée de détachement de l'unité cible à occurrence de panne à partir du menu de détachement ;
le procédé étant **caractérisé en ce qu'**il comprend en outre les étapes ci-dessous consistant à :
détecter un candidat de détachement inclus dans l'unité cible à occurrence de panne, sur la base des informations d'occurrence de panne ;
afficher le menu de détachement incluant le candidat de détachement ; et
détacher virtuellement le candidat de détachement en ignorant tous les signaux provenant du candidat de détachement afin d'invalider une fonction du candidat de détachement.

9. Procédé selon la revendication 8, comprenant en outre l'étape ci-dessous consistant à :
détacher l'unité cible à occurrence de panne en réponse à l'acceptation de l'entrée de détachement de l'unité cible à occurrence de panne.

10. Procédé selon la revendication 9, comprenant en outre l'étape ci-dessous consistant à :
afficher un état d'unité indiquant des unités attachées et des unités détachées sur la base du détachement de l'unité cible à occurrence de panne.

11. Procédé selon la revendication 9 ou 10, comprenant en outre l'étape ci-dessous consistant à :
afficher un menu initial incluant des informations concernant l'unité de détachement sur la base d'une instruction d'activation lorsqu'il existe une unité détachée.
